# EUROPEAN PATENT APPLICATION

(11) **EP 4 556 653 A1**
(43) Date of publication of application: **21.05.2025**
(21) Application number: 24200066.9
(22) Date of filing: 12.09.2024
(51) Int. Cl.: E04G 7/18, E04G 7/22, E04G 7/30, F16B 7/00, F16B 11/00

(54) **TUBE BUTT JOIN**

(30) Priority: 14.11.2023 GB 202317412
(71) Applicant: Lyte Ladders and Towers Limited, Swansea SA7 9BB (GB)
(72) Inventor: JOHN, Roger, Llanelli, SA15 2DF (GB)
(74) Representative: Murgitroyd & Company

(57) **Abstract**

The invention relates to a scaffold coupling for coupling an external side of a first scaffold pole to an end side of a second scaffold pole. The coupling comprises a body portion having a forward end comprising opposing shoulders for engagement against an external surface of the first scaffold pole and a channel between the opposing shoulders for receipt of the first scaffold pole; an engaging portion arranged to project from the body portion for engaging with an end of the second scaffold pole; and an adhesive delivery pathway through the body portion for enabling delivery of adhesive to the channel for adhering the scaffold coupling to the first scaffold pole.

## Description

### Field

The present disclosure relates to a coupling for joining the end of one pole to the side of another, and in particular a coupling for joining the end of a scaffold pole to the side of another.

### Background

Scaffold towers are typically made of aluminium with the frames being manufactured either by welding sections together or, in a minority of cases, crimping.

It is often necessary to join horizontal poles to vertical poles. In order to achieve this it is necessary to weld a horizontally extending spigot to a vertical pole for receipt of the end of the second pole. To ensure the spigot is securely welded to the first pole, significant material must be deposited to safely receive the spigot, or alternatively a joint between first and second vertical poles may be welded in place which carries the horizontal spigot. A horizontal pole is then welded in place to the spigot.

This process has several steps, resulting in an undesirable time commitment to manufacture a scaffold tower. Further, either cumbersome equipment must be transported around the scaffolding site, or electrical conduits/gas lines must be installed to enable the welding. Finally, these operations require a user qualified and certified to perform the welding, with all welds requiring full visual inspection prior to the tower being approved for use.

The present disclosure seeks to address some or all of these issues or at least provide a useful alternative.

### Summary

According to an aspect of the present disclosure there is a scaffold coupling for coupling an external side of a first scaffold pole to an end side of a second scaffold pole, the scaffold coupling comprising:
- a body portion having a forward end comprising opposing shoulders for engagement against an external surface of the first scaffold pole and a channel between the opposing shoulders for receipt of the first scaffold pole;
- an engaging portion arranged to project from the body portion for engaging with an end of the second scaffold pole; and
- an adhesive delivery pathway through the body portion for enabling delivery of adhesive to the channel for adhering the scaffold coupling to the first scaffold pole.

By having an adhesive delivery pathway through the body portion, to the channel, the manufacture of a scaffold tower section without welding or crimping is enabled. The channel beneficially has a depth and is defined by at least one channel wall suitable for receipt of the first pole. The channel may be defined by a concave surface.

Optionally, the adhesive delivery pathway passes from an inlet port in the body portion to an outlet port in the body portion, the outlet port for delivery of adhesive to the channel.

Optionally, the body portion comprises a bonding surface that at least partially defines the channel and is for enabling adhesive bonding of the scaffold coupling to the first scaffold pole.

The bonding surface is a concave surface which may have substantially the same diameter as a scaffold pole such that it can form a complete connection with a scaffold pole.

Optionally, a recess is defined within the bonding surface.

The recess extends into the body portion such that when the first pole is abutted to the abutment surface, a reservoir or well is defined by the recess and external surface of the first pole, the reservoir or well for filling with adhesive.

Optionally, the outlet port is in the recess.

Optionally, the engaging portion comprises a second bonding surface for enabling adhesive bonding of the scaffold coupling to the second scaffold pole, and where a second adhesive delivery pathway is defined through the body portion to enable delivery of an adhesive to the second bonding surface.

Optionally, the second adhesive delivery pathway is from the inlet port to a second outlet port in the second bonding surface.

Optionally, the engaging portion comprises a circumferential channel.

The circumferential channel beneficially extends around the engaging portion.

Optionally, the second outlet port is in the circumferential channel.

Optionally the scaffold coupling further comprises an adhesive relief flow pathway for enabling flow of adhesive from the channel to an adhesive relief outlet.

Optionally, the adhesive relief flow pathway is defined between a first relief aperture in the bonding surface to the adhesive relief outlet in the body portion.

The first relief and relief outlet apertures may be connected by a first relief bore; the first relief bore enabling the communication of fluid. The adhesive relief flow pathway effectively extends the first adhesive delivery pathway; such that when the bonding surface receives an external surface of a first scaffold pole adhesive may pass across the concave surface, to the first relief aperture, and through to the relief outlet aperture. The relief outlet aperture is beneficially exposed when the scaffold coupling is engaged with a first scaffold pole. This exposure provides a pathway for adhesive to exit the scaffold coupling and as such relieves any internal pressure from the injection of adhesive into the scaffold coupling. The first relief aperture and outlet port may be spaced across the first bonding surface. By spacing the first relief aperture and outlet port across the first bonding surface, adhesive must flow across the bonding surface before passing into the first relief aperture.

Optionally, the first relief aperture is in the recess.

Optionally, a second adhesive relief flow pathway is defined between a second relief aperture in the second bonding surface and the adhesive relief outlet.

The second relief and relief outlet apertures may be connected by a second relief bore; the second relief bore enabling the communication of fluid. The second adhesive relief flow pathway effectively extends the second adhesive delivery pathway; such that when the second bonding surface receives an end of a second scaffold pole adhesive may pass through the first channel, to the second relief aperture, and through to the relief outlet aperture. The relief outlet aperture is beneficially exposed when the scaffold coupling is engaged with a first and second scaffold poles. This exposure provides a pathway for adhesive to exit the scaffold coupling and as such relieves any internal pressure from the injection of adhesive into the scaffold coupling. The second relief aperture and second outlet port may be spaced around the second bonding surface. By spacing the second relief aperture and second outlet port around the second bonding surface, adhesive must flow around the second bonding surface before passing into the second relief aperture.

Optionally, the second relief aperture is in the circumferential channel.

Optionally, the engaging portion is a male engaging portion for insertion into the end of the second scaffold pole.

Optionally, the inlet port is located such that delivery of adhesive to the inlet port is enabled when the scaffold coupling is in engagement with the first and second scaffold poles.

Optionally, the body portion flares outwardly from the shoulders towards the engagement portion.

By flaring outwardly, more material is available to resist any splaying of the shoulders and consequential pressure loss when injecting adhesive through the first adhesive delivery pathway and into the recess.

Optionally, the body portion further comprises at least one through hole for receipt of a mechanical fixing, the mechanical fixing for fixing the scaffold coupling to the first pole.

The through hole may project from the concave surface and through the body portion. The bonding surface faces a first direction, and the hole may extend parallel to the first direction.

Optionally, the scaffold coupling comprises polymeric material.

According to an aspect of the present disclosure there is a kit comprising the scaffold coupling and at least one mechanical fixing.

Optionally, the at least one mechanical fixing is at least one rivet.

According to an aspect of the present disclosure there is a method of securing an external side of a first scaffold pole to an end of a second scaffold pole, the method comprising;
providing a scaffold coupling according to an aspect of the present disclosure;
abutting the shoulders of the scaffold coupling against the external surface of the first scaffold pole such that the first scaffold pole is received in the channel;
engaging the engaging portion of the scaffold coupling with the end of the second scaffold pole;
injecting adhesive through the adhesive flow pathway to the channel, and thereby to the external surface of the first scaffold pole, to adhere the first scaffold pole to the scaffold coupling.

It will be appreciated that the abutment of the channel and the engagement of the engaging portion may be performed in any order. It will be appreciated that the injection of the adhesive may be performed before the engagement of the engaging portion.

Optionally the method further comprises providing at least one mechanical fixing; passing the at least one mechanical fixing through the scaffold coupling and into the first scaffold pole.

### Description of Drawings

The present disclosure will now be described by way of example only with reference to the following illustrative figures in which:
Figure 1 shows a schematic perspective representation of a scaffold coupling in a first orientation, according to an embodiment of the present disclosure;
Figure 2 shows a schematic perspective representation of a scaffold coupling in a second orientation, according to an embodiment of the present disclosure;
Figure 3 shows a cross-sectional schematic representation of a scaffold coupling, according to an embodiment of the present disclosure;
Figure 4 shows a schematic perspective representation of a scaffold coupling, two mechanical fixings and two poles to be coupled, according to an embodiment of the present disclosure;
Figure 5 shows a schematic perspective representation of two poles coupled together by a scaffold coupling, according to an embodiment of the present disclosure;

The following description presents exemplary embodiments and, together with the drawings, serves to explain principles of the disclosure. The scope of the disclosure is not intended to be limited to the precise details of the embodiments or exact adherence with all method steps. Variations will be apparent to a skilled person and are deemed also to be covered by the description. Terms for features used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" are relative terms that may be used for convenience of explanation usually with reference to the illustrations and are not intended to be ultimately limiting if an equivalent function can be achieved with an alternative dimension and/or direction.

The description herein refers to embodiments with particular combinations of configuration steps or features. However, it is envisaged that further combinations and cross-combinations of compatible steps or features between embodiments will be possible. The description of multiple features in relation to any specific embodiment is not an indication that such features are inextricably linked, and isolated features may function independently from other features and not necessarily require implementation as a complete combination.

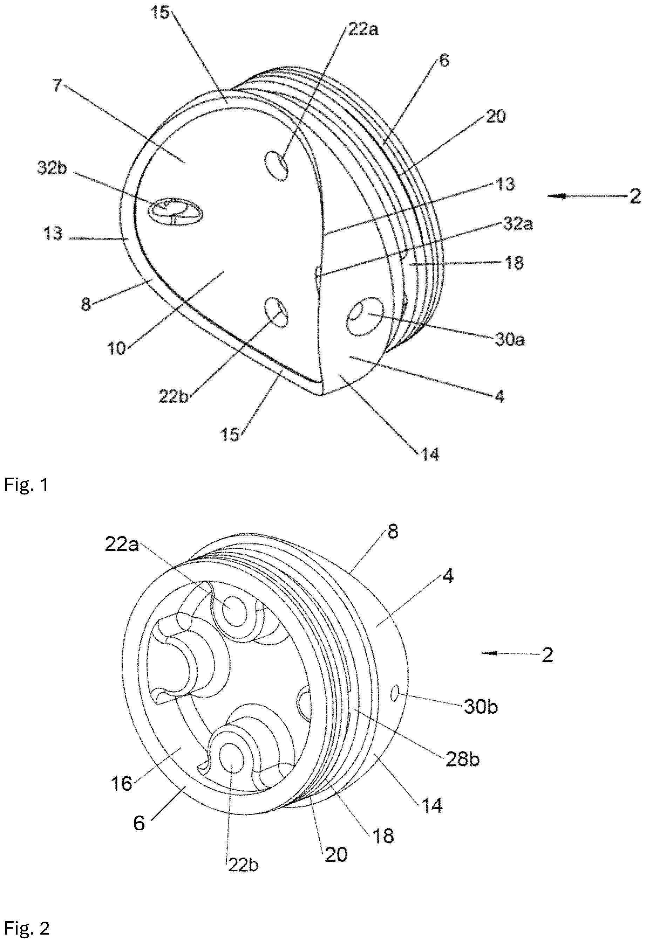

Referring to Figure 1 and 2, a scaffold coupling 2 is shown. The scaffold coupling 2 has a cylindrical engaging portion 6, and a body portion 4 extending away from the engaging portion 6. The engaging portion 6 is a male engaging portion, in that it is insertable into the end of a scaffold pole in an insertion direction. The body portion 4 comprises a pole receiving channel 7 having the same radius of curvature as a scaffold pole, such that a side of a scaffold pole can be received by the pole receiving channel 7. The pole receiving channel 7 faces a direction opposing the insertion direction, such that when the side of first scaffold pole is received by the pole receiving channel 7, and the engaging portion 6 is inserted into a second scaffold pole, the first pole is oriented perpendicularly to the second pole. It will be appreciated that by altering the orientation of the pole receiving channel 7 two scaffold poles can be arranged in any desired orientation.

Referring to the body portion 4, as best shown in Figure 1, the pole receiving channel 7 is defined by a concave bonding surface 8. A shallow recess 10 is inset into the concave surface 8 such that the concave surface 8 presents a rim 12 around the recess 10 periphery. Due to the concave nature of the concave surface 8, the rim 12 comprises two "high points" 13 positioned further from the engaging portion 6 and two "low points" 15 positioned closer to the engaging portion 6. The two "high points" 13 can also be described as opposing shoulders 13 that at least partially restrict the movement of any scaffold pole received by the pole receiving channel 7. Intermediate the concave surface 8 and engaging portion 6 the body portion 4 flares outwardly as it extends from the opposing shoulders 13 towards the engaging portion 6. This intermediate flaring portion defines an exterior surface 14, in that it is external or uncovered when a side of a first pole is received by the pole receiving channel 7 and the end of a second pole covers the engaging portion 6. By flaring outwards and thereby increasing the volume of material in this region, the body portion 4 is better configured to oppose any deformation of the pole receiving channel 7.

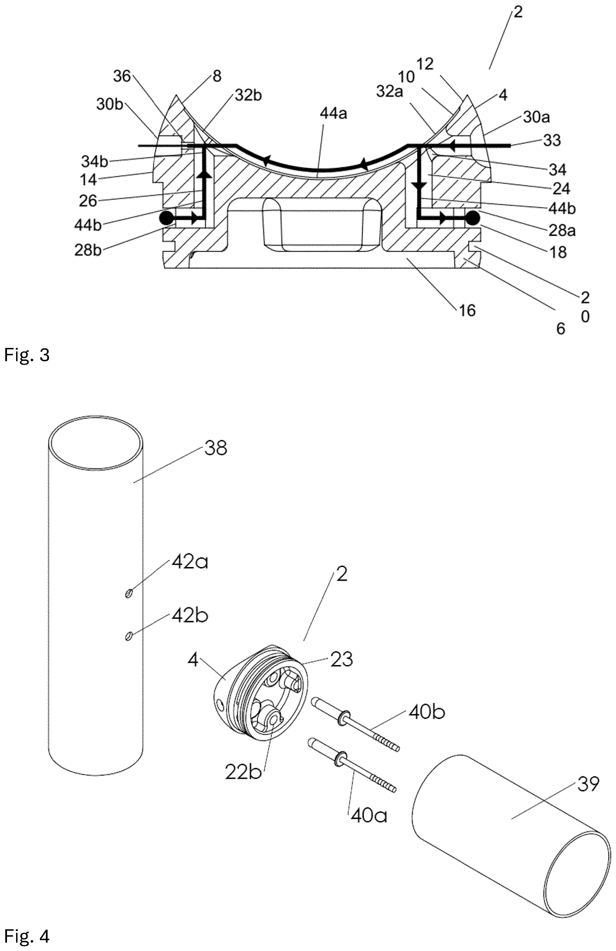

There is an inlet port 30a in the flaring portion of the body portion 4 open transversely relative to the longitudinal length of the scaffold coupling 2 and is accessible with the scaffold coupling coupled to first and second scaffold poles. The inlet port 30a provides access to an adhesive delivery pathway in the form of a bore through the body portion to the outlet port 32a in the recessed part of the bonding surface 8. Further present in the recessed part of the bonding surface 8 is a first relief aperture 32b spaced across the bonding surface 8 from the first outlet port 32a that provides an inlet to an adhesive relief flow pathway to external of the scaffold coupling. This will be described in more detail with respect to Figure 3.

Referring to the engaging portion 6, as best shown in Figure 2, the end of the engaging portion 6 (furthest from the body portion 4) is open, in that it has a recess 16 that extends through the engaging portion 6, making the engaging portion 6 substantially tubular in nature. Encircling the exterior of the engaging portion 6 and adjacent the interface between the body portion 4 and engaging portion 6 is a first channel 18. Longitudinally offset from this first channel 18, intermediate the first channel 18 and the end of the engaging portion 6, is a second channel 20 encircling the engaging portion 6. This second channel 20 is otherwise unconnected/not in communication with any other features of the scaffold coupling 2, such that when the engaging portion 6 of the scaffold coupling 2 is inserted into the end of a scaffold pole the second channel 20 acts as a pressure seal; thus providing a nominal retaining force to hold the scaffold coupling 2 onto the end of said scaffold pole. Further shown in Figure 2 is an adhesive relief outlet 30b again further described in detail with respect to Figure 3. Two holes 22a, 22b pass from the concave bonding surface 8 and through the body portion 4 and engaging 6 portions, such that a fixing can be passed from the engaging portion 6 to the body portion 4 and into a scaffold pole. The holes 22a, 22b are diametrically opposite one another.

Referring to Figure 3 presented is a cross sectional view of the scaffold coupling. Also shown is the location of adhesive 33 after assembly, with arrows showing how the adhesive flows through the scaffold coupling 2 during assembly. The inlet port 30a extends via a bore 34 into the body portion 4 defining an adhesive delivery pathway 34 to the first outlet port 32a thereby enabling delivery of adhesive to the channel. The bore 34 bifurcates at a location between the inlet port 30a and the first outlet port 32a and this branch of the bore 34 defines a second adhesive delivery pathway which extends to a second outlet port 28a. This enables adhesive to pass to the first channel 18.

As briefly described with respect to Figure 2, an adhesive relief outlet 30b is provided in the body portion 4 diametrically opposite to the inlet port 30a. This outlet 30a enables a person assembling the scaffold coupling to determine that sufficient adhesive has been injected into the inlet port 30a to ensure optimised adhesive bonding. Accordingly, a relief flow pathway is defined through the body portion 4 by bore 36 between the first relief aperture 32b and the adhesive relief outlet 30b. Accordingly, once sufficient adhesive has flowed into the channel 7 and has filled the recess meaning that there is a large bonding area between the scaffold pole and the scaffold coupling, superfluous adhesive will then flow through the bore 36. Additionally, as the adhesive flows circumferentially around the channel 18, diametrically opposite to the second outlet port 28a is located a second relief aperture 28b defining an opening to a second relief flow pathway in the form of a bore 26 extending to the adhesive relief outlet 30b. The bore 26 enables adhesive delivered to the first channel 18 by the branch of the bore 24 to pass out of the first channel 18. The streams of adhesive therefore from the recess 10 and first channel 18 merge and both exit via the adhesive relief outlet 30b providing an indicator to a person performing the assembly that there is sufficient adhesive added.

Referring to Figure 3, the diameter of the inlet port 30a is enlarged compared to the bore itself such that a nozzle of an adhesive applicator can be presented to the aperture 30a. Referring to the bore 24 intermediate the adhesive relief outlet 30b and the location at which the bores 26 from the first relief aperture 32b and second relief aperture 28b merge, the cross-sectional area of the bore 26 is reduced. This reduction in cross sectional area restricts the passage of adhesive to the body aperture 30b, thus encouraging adhesive to fill any voids within the scaffold coupling 2 before passing through.

Referring to Figure 4, a scaffold coupling 2 is shown in an exploded or uncoupled configuration, where all components are shown separately. The scaffold coupling 2 is typically for use when connecting vertical and horizontal scaffold poles, and as such is positioned adjacent to a vertical first scaffold pole 38; with the concave surface 8 of the scaffold coupling 2 facing towards the cylindrical face of the first pole 38. Further, two mechanical fixings in the form of two rivets 40a, 40b are aligned with the two holes 22a, 22b of the scaffold coupling 2. Finally, a horizontal second scaffold pole 39 is aligned with the rivets 40a, 40b and positioned such that when moved towards the scaffold coupling 2, the engaging portion passes into the end of the second pole 39. Two holes 42a, 42b are drilled into the first pole 38. They are sized to receive the rivets 40a, 40b and are positioned such that they have the same separation as the two holes 22a, 22b of the scaffold coupling 2.

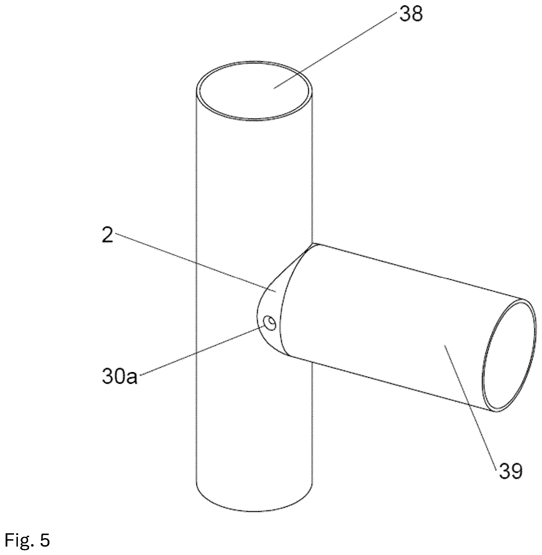

Referring to Figure 5 the scaffold coupling 2 shown in Figure 4 is assembled. The concave surface 8 of the scaffold coupling 2 is moved into engagement with the cylindrical side of the first pole 38. Each of the rivets 40a, 40b is inserted through their corresponding holes 22a, 22b in the scaffold coupling 2 and into the first pole 38 via their corresponding holes 42a, 42b. Each rivet 40a, 40b is then secured in place, mechanically fixing the scaffold coupling 2 to the first pole 38. This mechanical fixing, although optional, is beneficial for ensuring the scaffold coupling 2 is located in place on the first pole 38, providing a strong mechanical connection between the scaffold coupling 2 and first pole 38, and ensuring that any pressure exerted on the recess 10 of the body portion 4 does not force the scaffold coupling 2 away from the first pole 38. The second pole 39 has been moved towards and onto the scaffold coupling 2, such that the second pole 39 covers the engaging portion 6 of the scaffold coupling 2 and abuts the body portion 4 of the scaffold coupling 2. At this point, the scaffold coupling 2 has been mechanically secured to the first pole 38 in a vertical orientation, and the second pole 39 has been received onto the engaging portion 6 in a manner that supports the second pole 39 in a vertical orientation.

From the coupled configuration of Figure 5, an adhesive applicator (not shown) is then presented to the inlet port 30a and adhesive is injected. The adhesive simultaneously follows two flow paths 44a, 44b as best shown in Figure 3 with the adhesive represented by reference numeral 33.

The first flow path 44a passes from the inlet port 30a of the first passageway 24, and into the recess 10 of the body portion 4. The adhesive then passes through the recess 10 to the first relief aperture 32b and through to outlet 30b. This first flow path 44a enables the application of adhesive into the recess 10 of the body portion 4, thus enabling a strong connection between the scaffold coupling 2 and the first pole 38. During this process, the rivets 40a, 40b and the flared geometry of the exterior surface 14 act together to ensure the rim 12 of the body portion 4 is urged against the first pole 38; such that no adhesive can pass between the rim 12 and the first pole 38.

The second flow path 44b again passes from the inlet port 30a of the first passageway 24 and then into the first channel 18. The adhesive then splits and travels around the first channel 18, before rejoining at the second relief aperture 28b. The adhesive then passes into the bore 26 and merges with adhesive flow from the recess and to the adhesive relief outlet 30b. This second flow path 44b enables application of adhesive into the first channel 18, thus enabling a strong connection between the scaffold coupling 2 and the second pole 39.

After sufficient pressure builds up at the merging of both flow paths 44a, 44b (by fully filling the recess 10 of the body portion 4 and the first channel 18 of the engaging portion 6), the adhesive is then forced through the reduced cross-sectional area of the bore 26 and out of its adhesive relief outlet 30b. The exit of adhesive from this outlet 30b provides a visual indication as to the amount of adhesive within the scaffold coupling 2. Initially a negligible amount of adhesive will exit the scaffold coupling 2, due to the low internal pressure. However, as the scaffold coupling 2 is filled the pressure increases and thus the amount of adhesive exiting the scaffold coupling 2 also increases. This change in flow of adhesive from the outlet 30b provides a clear indication of when the scaffold coupling 2 is filled with adhesive.

In summary, by filling the recess 10 with adhesive, a strong adhesive bond is formed between the scaffold coupling 2 and the first pole 38. Correspondingly, by filling the first channel 18 with adhesive a strong adhesive bond occurs between the scaffold coupling 2 and second pole 39.

## Claims

1. A scaffold coupling for coupling an external side of a first scaffold pole to an end side of a second scaffold pole, the coupling comprising:
- a body portion having a forward end comprising opposing shoulders for engagement against an external surface of the first scaffold pole and a channel between the opposing shoulders for receipt of the first scaffold pole;
- an engaging portion arranged to project from the body portion for engaging with an end of the second scaffold pole; and
- an adhesive delivery pathway through the body portion for enabling delivery of adhesive to the channel for adhering the scaffold coupling to the first scaffold pole.

2. A scaffold coupling according to claim 1, wherein the adhesive delivery pathway passes from an inlet port in the body portion to an outlet port in the body portion, the outlet port for delivery of adhesive to the channel wherein the engaging portion is a male engaging portion for insertion into the end of the second scaffold pole; and/or wherein the engaging portion is a male engaging portion for insertion into the end of the second scaffold pole.

3. A scaffold coupling according to any preceding claim, wherein the body portion comprises a bonding surface that at least partially defines the channel and is for enabling adhesive bonding of the scaffold coupling to the first scaffold pole.

4. A scaffold coupling according to claim 3, wherein a recess is defined within the bonding surface.

5. A scaffold coupling according to claim 4, wherein the outlet port is in the recess.

6. A scaffold coupling according to any one of claims 3 - 5, wherein the engaging portion comprises a second bonding surface for enabling adhesive bonding of the scaffold coupling to the second scaffold pole, and where a second adhesive delivery pathway is defined through the body portion for enabling delivery of adhesive to the second bonding surface.

7. A scaffold coupling according to claim 6 when dependent on claim 2, wherein the second adhesive delivery pathway is from the inlet port to a second outlet port in the second bonding surface.

8. A scaffold coupling according to any preceding claim, wherein the engaging portion comprises a circumferential channel.

9. A scaffold coupling according to claims 7 and 8, wherein the second outlet port is in the circumferential channel.

10. A scaffold coupling according to any preceding claim further comprising an adhesive relief flow pathway for enabling flow of adhesive from the channel to an adhesive relief outlet;
and optionally wherein the body portion comprises a bonding surface that at least partially defines the channel and is for enabling adhesive bonding of the scaffold coupling to the first scaffold pole and wherein the adhesive relief flow pathway is defined between a first relief aperture in the bonding surface to the adhesive relief outlet in the body portion;
and optionally wherein a recess is defined within the bonding surface and wherein the first relief aperture is in the recess.

11. A scaffold coupling according to claim 10, wherein a second adhesive relief flow pathway is defined between a second relief aperture in the second bonding surface and the adhesive relief outlet; and optionally where the engaging portion comprises a circumferential channel, the second relief aperture is in the circumferential channel.

12. A scaffold coupling according to any of claims 2-11, wherein the inlet port is located such that delivery of adhesive to the inlet port is enabled when the scaffold coupling is in engagement with the first and second scaffold poles.

13. A scaffold coupling according to any preceding claim, wherein the body portion flares outwardly from the shoulders towards the engagement portion; and/or wherein the body portion further comprises at least one through hole for receipt of a mechanical fixing, the mechanical fixing for fixing the scaffold coupling to the first pole; and/or wherein the scaffold coupling comprises polymeric material.

14. A kit comprising a scaffold coupling according to any preceding claim and at least one mechanical fixing, and optionally wherein the at least one mechanical fixing is at least one rivet.

15. A method of securing an external side of a first scaffold pole to an end of a second scaffold pole, the method comprising;
providing a scaffold coupling according to any of claims 1 - 14; abutting the shoulders of the scaffold coupling against the external surface of the first scaffold pole such that the first scaffold pole is received in the channel;
engaging the engaging portion of the scaffold coupling with the end of the second scaffold pole;
injecting adhesive through the adhesive flow pathway to the channel, and thereby to the external surface of the first scaffold pole, to adhere the first scaffold pole to the scaffold coupling.
